# EUROPEAN PATENT SPECIFICATION

(11) **EP 0 382 342 B1**
(45) Date of publication and mention of the grant of the patent: **22.11.1995**
(21) Application number: 90300348.1
(22) Date of filing: 11.01.1990
(51) Int. Cl.: G06F 13/42, G06F 13/28

(54) **Computer system DMA transfer**
DMA-Übertragung für Rechnersystem
Transmission DMA pour système ordinateur

(30) Priority: 13.01.1989 US 297774
(43) Date of publication of application: 16.08.1990
(73) Proprietor: International Business Machines Corporation, Armonk, N.Y. 10504 (US)
(72) Inventor: Arimilli, Ravi Kumar, Round Rock, Texas 78664 (US); Dhawan, Sudhir, Austin, Texas 78727 (US); Nicholson, James Otto, Austin, Texas 78731 (US); Siegel, David William, Austin, Texas 78727 (US)
(74) Representative: Bailey, Geoffrey Alan

(56) References cited:
- EP-A- 0 264 740
- GB-A- 2 074 765
- PATENT ABSTRACTS OF JAPAN, vol. 10, no. 183 (P-472)[2239], 26th June 1986
- WESCON/87 CONFERENCE RECORD, vol. 31, 1987, pages 19/5 1-10, Los Angeles, California, US; R.A. DANIEL: "DMA techniques for personal computer data acquisition"
- PATENT ABSTRACTS OF JAPAN, vol. 13, no. 4 (P-809)[3352], 9.1.89

## Description

The present invention relates to Direct Memory Access (DMA) transfers on computer systems.

To improve computer system performance, direct memory access (DMA) devices are often used to transfer data between input output (I/O) devices and system memory. These devices provide for block data transfer in either direction. Typically, all that is required for a DMA transfer is control of the bus, a starting address, and a length of block count.

The standard DMA interface between memory and an I/O device works well when there is a direct, dedicated connection between the DMA controller and the I/O device. However, in some systems, such tight coupling between the DMA controller and the I/O devices is not possible. For example, in the System2 bus used in the IBM PS/2 series of microcomputers, also known as the Micro Channel bus, such close coupling between the I/O devices and the DMA controller connected to system memory is not possible (Micro Channel, PS/2 and IBM are trademarks of the International Business Machines Corporation). In these machines, there are actually two buses. A first bus, referred to as a system bus, connects the central processor, system main memory, and an I/O cache controller (IOCC) which includes the functions of a DMA device. Also attached to the IOCC is an I/O bus. It is this I/O bus which is referred to as the Micro Channel bus.

I/O devices which are attached to the system communicate through the I/O bus. They communicate only indirectly with the central processor and system memory through the IOCC. The IOCC then passes data transfers on to the central processor and system memory.

Since two separate buses are involved, the standard DMA configuration cannot be used. All of the I/O devices on the I/O bus reside in an I/O address space, and must be separately addressed by the IOCC. This means that the IOCC must generate an address to read an item of data from an I/O device, read that data item from the I/O bus, generate an address on the system bus, and place the data item on the system bus. This results in a system where the interface between the two separate buses, the IOCC, must read from one bus on one cycle and write to the other bus on the next cycle. This results in a certain amount of system inefficiency since both buses are only operating at half capacity.

In Patent Abstracts of Japan, vol 13, no 4, pg 809 (3352), a DMA controller of the above type is described. In this particular DMA circuit, there is a clock switching circuit provided so that during DMA transfers a clock signal different to the CPU clock signal is used. This different clock signal is then used for both the reading and writing steps of the DMA transfer, the DMA controller reading from one bus on one cycle of the clock and writing to the other bus on the next cycle of the clock. Hence the buses in this DMA controller are still operating in an inefficient manner.

It would therefore be desirable to provide an interface between two buses which could improve DMA data transfer between an I/O device on one bus and a system memory on the other bus.

Accordingly the present invention provides a system for transferring data by direct memory access between a first device and a second device, comprising:
a first bus coupled to the first device, said first bus having a clock signal for controlling data transfer timing; a second bus coupled to the second device, said second bus having a clock signal for controlling data transfer timing; and a controller coupled to said first and second buses for controlling the transfer of data between the first and second devices ; the system being characterised in that: the second bus clock signal is under the control of said controller; and the controller, during a data transfer between the first device and the second device, reads a data item from one device during a cycle of that device's bus clock, and writes a data item to the other device during a cycle of that other device's bus clock, whereby the controller reads from the one device via one bus while writing to the other device via the other bus.

The present invention also provides a method for transferring data by direct memory access between a first device connected to a first bus and a second device connected to a second bus, by means of a controller coupled to the first bus and to the second bus, the first bus having a clock signal for controlling data transfer timing, and the second bus having a clock signal for controlling data transfer timing, the method being characterised by the steps of: employing the controller to control the second bus clock signal; and during a data transfer between the first device and the second device, reading a data item from one device during a cycle of that device's bus clock, and writing a data item to the other device during a cycle of that other device's bus clock; whereby the controller reads from the one device via one bus while writing to the other device via the other bus.

When the two buses have the same data transfer rate, then the reading and writing steps that occur during the data transfer between the first device and the second device comprise the following steps carried out by the controller:
(a) reading a data item from one device according to the bus clock signal of that device's bus;
(b) writing said data item to the other device according to the bus clock signal of that other device's bus;
(c) simultaneously with step (b), reading a next data item from the one device;
(d) repeating steps (b) and (c) until all data items to be transferred have been read from the one device; and
(e) writing a last data item to the other device.

Therefore in accordance with the present invention, a DMA controller coupled to two buses reads from one bus while writing to the other. Data transfer occurs during each clock cycle of each bus. Since no waits are required on either bus, high speed block transfer techniques which are available on a bus can be used to transfer block data efficiently.

In a preferred embodiment, the block data transfer will accommodate a high speed block transfer mode in which data is transferred at a higher rate than provided for by a normal bus cycle on one bus.

In order that the invention may be fully understood a preferred embodiment thereof will now be described, by way of example only, with reference to the accompanying drawings in which:-
FIGURE 1 is a block diagram of a computer system containing two buses;
FIGURE 2 is a flowchart illustrating a data transfer between devices on two separate buses according to the present invention;
FIGURE 3 is a timing diagram illustrating a data transfer according to the present invention; and
FIGURE 4 is a timing diagram illustrating a high speed block data transfer according to the present invention.

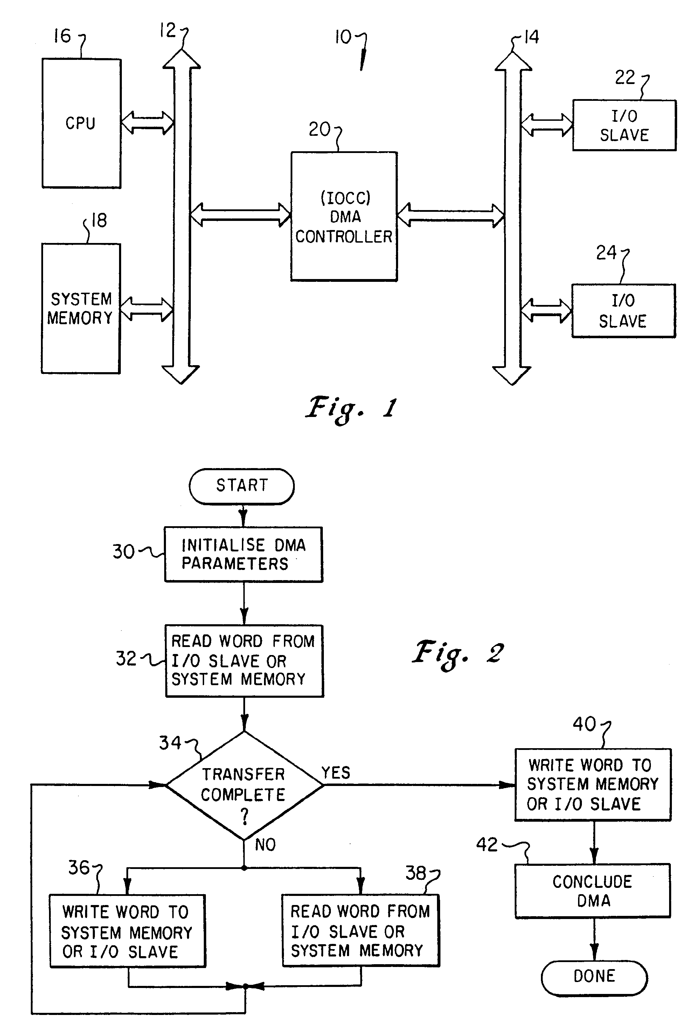

Figure 1 shows a block diagram of a computer system 10 which includes a main system bus 12 and an I/O bus 14. A central processor 16 is attached to the system bus 12, as is a main system memory 18.

An I/O cache controller (IOCC) 20 is connected to the system bus 12 and the I/O bus 14. The IOCC 20 performs a number of I/O interface functions, including control of a small cache memory (not shown) used to buffer the I/O bus 14. The function of the IOCC 20 which is relevant to the present invention is its operation as a direct memory access (DMA) controller. In its function as a DMA controller, the IOCC 20 can transfer data to and from the system memory 18.

Also attached to the I/O bus 14 are I/O slave devices 22 and 24. The I/O slaves 22, 24 can be any devices suitable for attachment to the I/O bus 14. These can include, for example, video controllers, keyboard controllers, serial and parallel I/O ports, and disk controllers. Of special interest to the present invention are those devices, such as video controllers and disk controllers, which are capable of block data transfers.

A preferred method used by the IOCC 20 for transferring data between the system memory 18 and an I/O slave 22 or 24 is shown in Figure 2. The first step is for the IOCC 20 to initialize the DMA parameters 30. Information typically needed for a DMA block transfer is the starting address and block length. Step 30 also includes any necessary signalling to the system memory 18 and the I/O slave device (22 or 24) between which the transfer will be made.

The IOCC 20 then reads the first word to be transferred 32. If the transfer is from an I/O slave to the system memory 18, this word is read from the slave. If the transfer is from the system memory 18 to an I/O slave, this word is read from the system memory 18.

Next, a check is made 34 to see if the transfer is complete. It is possible to transfer only a single data word, but for longer blocks the test 34 will be negative.

If the transfer is not yet complete, the IOCC 20 simultaneously writes one word 36 and reads the next word to be transferred 38. One each of the write and read steps are performed on the system bus 12 and the I/O bus 14 simultaneously, depending upon the direction of data transfer. Flow of control then returns to step 34 to again test for the end of the transfer.

Once the transfer completes, control passes to step 40, which causes the last word to be written to the receiving device. The IOCC 20 then concludes the DMA 42 and the process is complete.

For the transfer described in Figure 2, the system bus 12 and the I/O bus 14 may be of disparate types. If one bus is faster than the other, the maximum data throughput will of course be limited by the transfer speed of the slower bus. Figure 2 as described is intended for systems in which the block data transfer rate of the two buses is the same. If one bus is significantly faster than the other, it is possible to include a buffer (not shown) in the IOCC 20 for buffering reads from or writes to that bus. Use of a buffer would allow transfers to be made to and from the faster bus at its normal operating speed, freeing some bus cycles for use by other device.

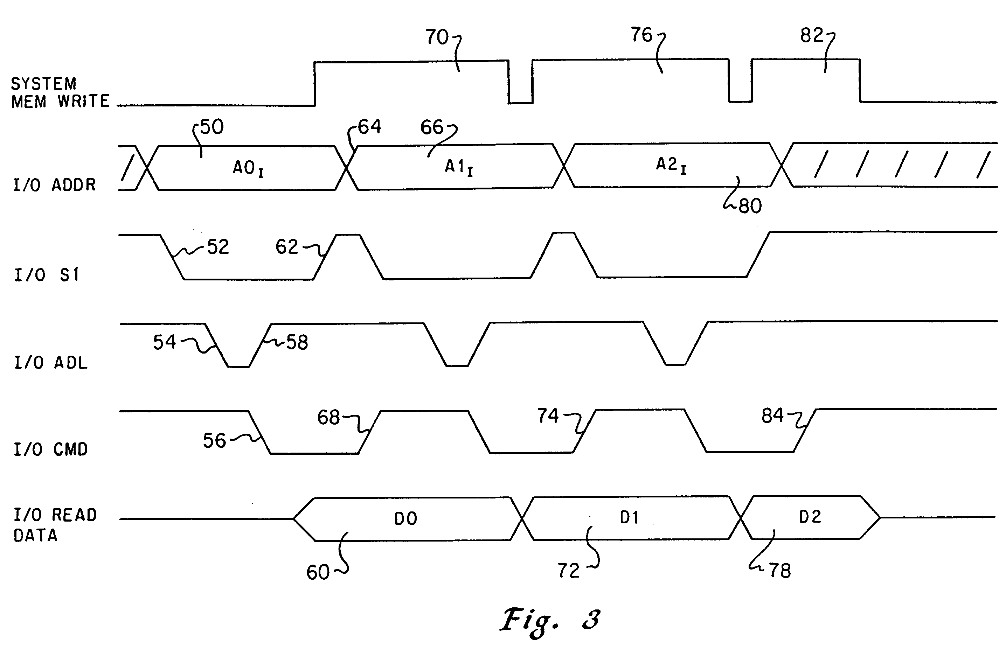

Figure 3 is a timing diagram illustrating a block data transfer from a device on the I/O bus to system memory 18. In the described embodiment, the I/O bus 14 is a System2 bus such as found in the IBM PS/2 family of microcomputers. The system bus 12 may be a system bus such as found in such microcomputers, or may be another system bus such as known in the art, for example another System2 bus. The details of the operation of the system bus 12 are not part of the present invention.

In Figure 3, only those bus signals necessary to describe the present invention are shown. Additional bus signals exist, and their function is described in detail in publicly available documents.

Referring to Figure 3, the signal SYSTEM MEM WRITE indicates the time periods during which data is being transferred into the system memory 18 across the system bus 12. The signal SYSTEM MEM WRITE is not actually a bus signal; a high value indicates that bus activity to transfer data is taking place, while a low value indicates that no data transfer is occurring across the system bus 12.

The signal I/O ADDR is the address placed onto the I/O bus 14 by the IOCC 20. I/O S1 is a signal indicating that a read cycle is to take place on the I/O bus. I/O ADL is a signal meaning "address latch", and is used to latch address signals into devices attached to the I/O bus 14.

I/O CMD is the clock signal for the I/O bus 14. I/O READ DATA represents the data lines of the I/O bus 14.

Figure 3 shows the relevant bus signals when a transfer is being made from a device attached to the I/O bus 14 to the system memory 18. First, the IOCC determines the parameters of the transfer, including the starting address on the system bus 12 and the I/O bus 14, and the length of the block to be transferred.

The IOCC 20 then asserts the first address 50 onto the I/O ADDR lines. I/O S1 is then driven low 52 to indicate that this is a read cycle from the I/O bus 14. ADL is then driven low 54 to latch the address 50 into the I/O slave being addressed.

I/O CMD is driven low 56 to begin a bus cycle. I/O ADL is driven high 58 at the same time.

Since this is a read cycle on the I/O bus, as indicated by I/O S1, data is placed onto the data lines by the I/O slave. After the bus cycle is begun with the transition 56 of I/O CMD, the slave device drives the previously tri-stated I/O READ DATA lines with the value of the first data item 60.

The signal I/O S1 is allowed to transition high 62 as is standard on this bus. The values on I/O ADDR are changed 64 in order to place a second read address 66 onto the lines. The bus cycle completes when I/O CMD transitions high 68, at which time the first data item 60 is read from the I/O bus 14 and latched into an internal register (not shown) of the IOCC 20.

During the first I/O bus cycle, the system bus has been active 70. During this time period 70, the data which is latched into the IOCC 20 is written to the system memory 18. The SYSTEM MEM WRITE active period 70 includes addressing of the system memory 18, changing of control signals, and writing of data onto the system bus 12.

The transfer above has been described as a read of the first data item from the I/O bus 14, followed by latching the data into the IOCC 20 at the transition 68 of I/O CMD. This has been described as being followed by a write onto the system bus 12 during the active period 70. In the alternative, it is not necessary to actually latch the data item 60 into a register latch within the IOCC 20. Instead, it is possible for the IOCC 20 to provide a direct connection between the data lines of the I/O bus 14 and the system bus 12. The rising transition 68 of I/O CMD, normally used to latch the data items 60 into the IOCC, can instead be used to generate a control signal onto the system bus 12 which causes the data to be immediately written into the system memory 18.

The remaining two data transfers illustrated in Figure 3 operate in an identical manner. The second data item 72 is transferred on the rising transition 74 of I/O CMD, and is written to the system memory 18 during the active bus period 76. The final data item 78, addressed by the third address 80, is written to the system memory 18 during the system bus active period 82 when the I/O CMD signal transitions high 84.

As can be seen by the above description, a new data item is read during each bus cycle of the I/O bus 14, and transferred to the system memory 18 in parallel with the data reads. Thus, it is not necessary to read the I/O bus 14 on one clock cycle, and generate a write cycle on the system bus 12 on the following system clock cycle.

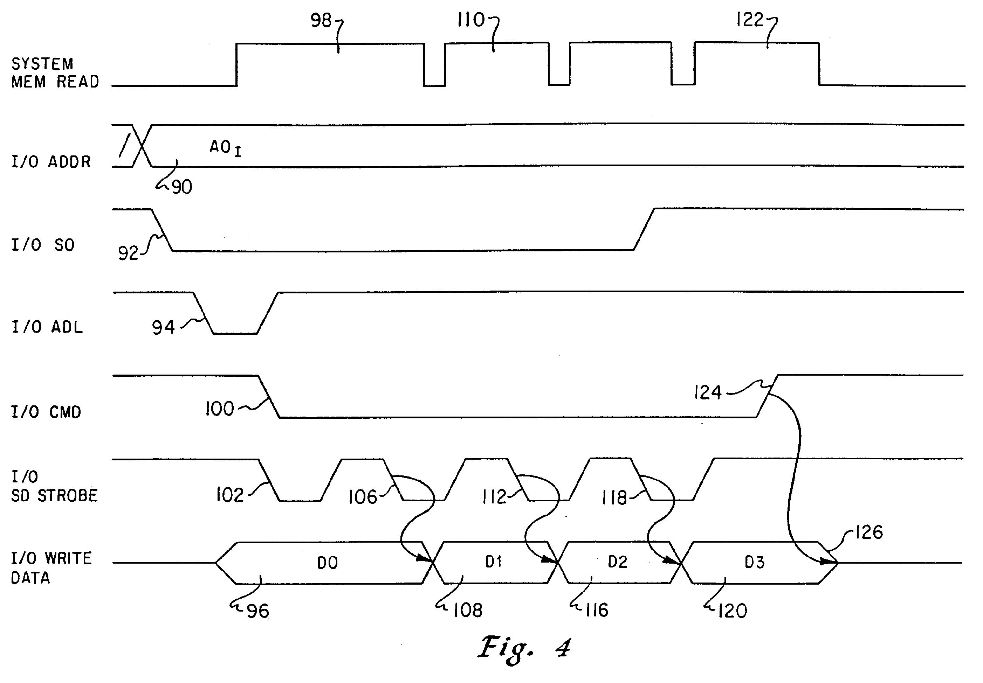

Figure 4 shows a high speed data transfer using a protocol referred to as a streaming data transfer. The functioning of streaming data transfers is described in detail in copending patent applications. Figure 4 includes only those signals necessary to illustrate how a streaming data transfer on the I/O bus 14 can be used to make a block transfer of data into the system memory 18. Additional control signals, necessary to the transfer but not to its understanding terms of the present invention, are described in the above mentioned copending applications.

Figure 4 illustrates a transfer from system memory 18 to a slave device attached to the I/O bus 14. This involves a read from system memory 18 on the system bus 12, and a write to the I/O slave on the I/O bus 14. The I/O signals are the same as those shown in Figure 3, except that I/O S0 has been substituted for I/O S1 and that I/O WRITE DATA has been substituted for I/O READ DATA. I/O S0 is used to indicate that a write operation is being performed to a device attached to the I/O bus 14. I/O SD STROBE is an additional high speed clock signal associated with streaming data transfers; its function is described in the above mentioned copending applications.

The IOCC 20 begins the block data transfer by asserting the starting address 90 onto the signal lines I/O ADDR. Next, I/O S0 is transitioned low 92 to indicate that this transfer is a write transfer on the I/O bus 14. Next, I/O ADL is transitioned low 94 to latch the address 90 into the I/O slave device as described above.

The data lines of the I/O bus 14, represented by I/O WRITE DATA, are activated by the IOCC 20. When the first data item 96 is available from the system bus, it is placed onto I/O WRITE DATA. During a system bus active period 98, the first data item is read from system memory 18 and made available to the IOCC 20. As described above in connection with Figure 3, the value read from the system bus 12 can be latched into a buffer internal to the IOCC, then made available to the I/O bus 14. In the alternative, the data item 96 can be connected directly from the system bus 12 to the I/O bus 14.

The transfer cycle actually begins when I/O CMD transitions low 100. The signal I/O SD STROBE is transitioned low 102 at the same time.

The first data item 96 is transferred from the IOCC 20 to the I/O bus 14 at the second falling transition 106 of I/O SD STROBE. Once the data is transferred, the next data item 108 is read from the system bus 12 during the next system bus active cycle 110 and transferred to the I/O bus 14 during the falling transition 112 of I/O SD STROBE.

This process can continue for any number of data cycles until the next to last data cycle. The next to last data item 116 is transferred to the I/O bus 14 on the last falling transition 118 of I/O SD STROBE. After the next to last data item 116 is transferred, the last data item 120 is transferred to I/O WRITE DATA after being read from the system memory 18 during system bus active period 122.

The last data item 120 is transferred to the I/O bus 14 by the rising transition 124 of I/O CMD. After a sufficient delay to allow the I/O slave device attached to the I/O bus 14 to read and latch the last data item 120, the data buffers on the I/O bus 14 are tri-stated 126 by the IOCC 20.

The system and method described above allow for efficient block transfer of data between the system memory 18 attached to the system bus 12, and an I/O slave device 22, 24 attached to the I/O bus 14. One data item is transferred on each bus during each clock cycle. The technique described herein accommodates the use of a high speed streaming data protocol on the I/O bus 14, which can greatly increase the block transfer rate of data through the IOCC 20.

## Claims

1. A system for transferring data by direct memory access between a first device (18) and a second device (22, 24), comprising:
a first bus (12) coupled to the first device (18), said first bus having a clock signal for controlling data transfer timing;
a second bus (14) coupled to the second device (22, 24), said second bus having a clock signal for controlling data transfer timing; and
a controller (20) coupled to said first and second buses for controlling the transfer of data between the first (18) and second (22, 24) devices;
the system being characterised in that:
the second bus clock signal is under the control of said controller; and
the controller (20), during a data transfer between the first device (18) and the second device (22, 24), reads a data item from one device during a cycle of that device's bus clock, and writes a data item to the other device during a cycle of that other device's bus clock, whereby the controller reads from the one device via one bus while writing to the other device via the other bus.

2. A system as claimed in claim 1, wherein said second bus clock signal can be a high speed clock signal for controlling data transfer timing during a high speed data transfer.

3. A system as claimed in claim 1 or claim 2, wherein, when the first bus and the second bus have the same data transfer rate, the controller (20) can read from one device during each cycle of that device's bus clock, and simultaneously write to the other device during each cycle of that other device's bus clock.

4. A system as claimed in claim 1 or claim 2, wherein a buffer is included in the controller (20) such that when the first and second bus clock signals are different, the controller (20) can read from one device during each cycle of that device's bus clock, and simultaneously write to the other device during each cycle of that other device's bus clock.

5. A system as claimed in any preceding claim, wherein the data transfer between the first and second devices is a block data transfer comprising a plurality of consecutive data items.

6. A method for transferring data by direct memory access between a first device (18) connected to a first bus (12) and a second device (22, 24) connected to a second bus (14), by means of a controller (20) coupled to the first bus and to the second bus, the first bus (12) having a clock signal for controlling data transfer timing, and the second bus (14) having a clock signal for controlling data transfer timing, the method being characterised by the steps of:
employing the controller (20) to control the second bus clock signal; and
during a data transfer between the first device (18) and the second device (22, 24), reading a data item from one device during a cycle of that device's bus clock, and writing a data item to the other device during a cycle of that other device's bus clock;
whereby the controller reads from the one device via one bus while writing to the other device via the other bus.

7. A method as claimed in claim 6, wherein said second bus clock signal can be a high speed clock signal for controlling data transfer timing during a high speed data transfer.

8. A method as claimed in claim 6 or claim 7, wherein, when the first bus and the second bus have the same data transfer rate, the controller (20) can read from one device during each cycle of that device's bus clock, and simultaneously write to the other device during each cycle of that other device's bus clock.

9. A method as claimed in claim 6 or claim 7, wherein a buffer is included in the controller (20) such that when the first and second bus clock signals are different, the controller (20) can read from one device during each cycle of that device's bus clock, and simultaneously write to the other device during each cycle of that other device's bus clock.

10. A method as claimed in claim 8, wherein the reading and writing steps that occur during the data transfer between the first device (18) and the second device (22, 24) comprise the following steps carried out by the controller:
(a) reading a data item from one device according to the bus clock signal of that device's bus;
(b) writing said data item to the other device according to the bus clock signal of that other device's bus;
(c) simultaneously with step (b), reading a next data item from the one device;
(d) repeating steps (b) and (c) until all data items to be transferred have been read from the one device; and
(e) writing a last data item to the other device.

11. A method as claimed in any of claims 6 to 10, wherein the data transfer between the first and second devices is a block data transfer comprising a plurality of consecutive data items.

## Patentansprüche

1. Ein System zur Übertragung von Daten durch Direktspeicherzugriff zwischen einer ersten Einheit (18) und einer zweiten Einheit (22, 24), das folgendes umfaßt:
Einen ersten Bus (12), der mit der ersten Einheit (18) gekoppelt ist, wobei der erste Bus ein Taktsignal zur Steuerung des Datenübertragungszeitpunkts enthält;
Einen zweiten Bus (14), der mit der zweiten Einheit (22, 24) gekoppelt ist, wobei der zweite Bus ein Taktsignal zur Steuerung des Datenübertragungszeitpunkts enthält; und
Einen Controller (20), der mit dem ersten Bus und dem zweiten Bus gekoppelt ist und die Übertragung von Daten zwischen der ersten (18) und der zweiten (22, 24) Einheit steuert;
Wobei das System dadurch gekennzeichnet ist, daß:
Das Taktsignal des zweiten Busses der Steuerung des Controllers unterliegt; und
Der Controller (20) während einem Datenübertragungsvorgang zwischen der ersten Einheit (18) und der zweiten Einheit (22, 24) ein Datenelement von der einen Einheit während eines Zyklus des Bustakts dieser Einheit liest, und ein Datenelement auf die andere Einheit während eines Zyklus des Bustakts der anderen Einheit schreibt, wodurch der Controller über den einen Bus einen Lesevorgang auf der einen Einheit durchführt, während er über den anderen Bus einen Schreibvorgang auf der anderen Einheit durchführt.

2. Ein System wie in Patentanspruch 1 niedergelegt, in dem das Taktsignal des zweiten Busses ein Hochgeschwindigkeitstaktsignal zur Steuerung des Datenübertragungszeitpunkts während einer Hochgeschwindigkeitsdatenübertragung sein kann.

3. Ein System wie in Patentanspruch 1 oder 2 niedergelegt, bei dem - wenn der erste Bus und der zweite Bus die gleiche Datenübertragungsrate aufweisen - der Controller (20) während eines jeden Zyklus des Bustakts der einen Einheit einen Lesevorgang auf der einen Einheit durchführen kann und gleichzeitig während eines jeden Zyklus des Bustakts der anderen Einheit einen Schreibvorgang auf der anderen Einheit durchführen kann.

4. Ein System wie in Patentanspruch 1 oder 2 niedergelegt, bei dem der Controller (20) einen Puffer enthält, so daß der Controller (20) bei unterschiedlichen Taktsignalen des ersten und zweiten Busses während eines jeden Zyklus des Bustakts dieser Einheit einen Lesevorgang auf der einen Einheit durchführen kann und gleichzeitig während eines jeden Zyklus des Bustakts der anderen Einheit einen Schreibvorgang auf der anderen Einheit durchführen kann.

5. Ein System wie in einem beliebigen der vorstehenden Patentansprüche offenbart, in dem die Datenübertragung zwischen der ersten und der zweiten Einheit eine Blockdatenübertragung ist, die eine Vielzahl von aufeinanderfolgenden Datenelementen beinhaltet.

6. Ein Verfahren zur übertragung von Daten durch Direktspeicherzugriff zwischen einer ersten, mit einem ersten Bus (12) verbundenen Einheit (18) und einer mit einem zweiten Bus (14) verbundenen Einheit (22, 24) über einen Controller (20), der mit dem ersten und dem zweiten Bus gekoppelt ist, wobei der erste Bus (12) ein Taktsignal zur Steuerung des Datenübertragungszeitpunkts liefert und der zweite Bus (14) ein Taktsignal zur Steuerung des Datenübertragungszeitpunkts liefert, wobei das Verfahren durch folgende Schritte gekennzeichnet ist:
Einsatz des Controllers (20) zur Steuerung des zweiten Bustaktsignals; und
Während eines Datenübertragungsvorgangs zwischen der ersten Einheit (18) und der zweiten Einheit (22, 24) Lesen eines Datenelements von der einen Einheit während eines Zyklus des Bustakts dieser Einheit, und Schreiben eines Datenelements auf die andere Einheit während eines Zyklus des Bustakts dieser anderen Einheit;
Wodurch der Controller von der einen Einheit über einen Bus liest, während er auf die andere Einheit über den anderen Bus schreibt.

7. Ein Verfahren wie in Patentanspruch 6 niedergelegt, bei dem das zweite Bustaktsignal ein Hochgeschwindigkeitstaktsignal zur Steuerung des Datenübertragungszeitpunkts während einer Hochgeschwindigkeitsdatenübertragung sein kann.

8. Ein Verfahren wie in Patentanspruch 6 oder 7 niedergelegt, bei dem - wenn der erste Bus und der zweite Bus die gleiche Datenübertragungsrate aufweisen - der Controller (20) während eines jeden Zyklus des Bustakts der einen Einheit einen Lesevorgang auf der einen Einheit durchführen kann und gleichzeitig während eines jeden Zyklus des Bustakts der anderen Einheit einen Schreibvorgang auf der anderen Einheit durchführen kann.

9. Ein Verfahren wie in Patentanspruch 6 oder 7 niedergelegt, bei dem der Controller (20) einen Puffer enthält, so daß der Controller (20) bei unterschiedlichen Taktsignalen des ersten und zweiten Busses während eines jeden Zyklus des Bustakts der einen Einheit einen Lesevorgang auf der einen Einheit durchführen kann und gleichzeitig während eines jeden Zyklus des Bustakts der anderen Einheit einen Schreibvorgang auf der anderen Einheit durchführen kann.

10. Ein Verfahren wie in Patentanspruch 8 niedergelegt, bei dem die Lese- und Schreibschritte, die während der Datenübertragung zwischen der ersten Einheit (18) und der zweiten Einheit (22, 24) stattfinden, die folgenden, vom Controller durchgeführten Schritte beinhalten:
(a) Lesen eines Datenelements von einer Einheit gemäß dem Bustaktsignal des Busses dieser Einheit;
(b) Schreiben des Datenelements auf die andere Einheit gemäß dem Bustaktsignal des Busses der anderen Einheit;
(c) Gleichzeitig mit Schritt (b): Lesen eines nächsten Datenelements von der einen Einheit;
(d) Wiederholen der Schritte (b) und (c), bis alle zu übertragenden Datenelemente von der einen Einheit gelesen wurden; und
(e) Schreiben eines letzten Datenelements auf die andere Einheit.

11. Ein Verfahren wie in einem beliebigen der Patentansprüche 6 bis 10 niedergelegt, bei dem die Datenübertragung zwischen der ersten und der zweiten Einheit eine Blockdatenübertragung mit einer Vielzahl aufeinanderfolgender Datenelemente beinhaltet.

## Revendications

1. Système pour transférer des données par accès direct à la mémoire entre un premier dispositif (18) et un deuxième dispositif (22, 24), comprenant :
un premier bus (12) couplé au premier dispositif (18), ledit premier bus ayant un signal d'horloge pour contrôler le cadencement du transfert de données;
un deuxième bus (14) couplé au deuxième dispositif (22, 24), ledit deuxième bus ayant un signal d'horloge pour contrôler le cadencement du transfert de données; et
un contrôleur (20) couplé aux dits premier et deuxième bus pour contrôler le transfert de données entre le premier (18) et le deuxième dispositif (22, 24);
ledit système étant caractérisé en ce que :
le signal d'horloge du deuxième bus est sous le contrôle du dit contrôleur; et
le contrôleur (20), au cours d'un transfert de données entre le premier dispositif (18) et le deuxième dispositif (22, 24), extrait (lit) un élément d'information de l'un des dispositifs au cours d'un cycle d'horloge du bus de ce dispositif, et charge (écrit) un élément d'information dans l'autre des dispositifs au cours d'un cycle d'horloge du bus de cet autre dispositif, le contrôleur exécutant ainsi une opération de lecture de l'un des dispositifs via un bus tout en exécutant une opération d'écriture sur l'autre des dispositifs via l'autre bus.

2. Système selon la revendication t, dans lequel le signal d'horloge du dit deuxième bus peut être un signal d'horloge à grande vitesse pour contrôler le cadencement du transfert de données au cours d'un transfert de données à grande vitesse.

3. Système selon la revendication 1 ou 2, dans lequel, lorsque le premier bus et le deuxième bus ont la même cadence de transfert de données, le contrôleur (20) peut lire de l'un des dispositifs au cours de chaque cycle d'horloge du bus de ce dispositif, et écrire simultanément dans l'autre des dispositifs au cours de chaque cycle d'horloge du bus de cet autre dispositif.

4. Système selon la revendication 1 ou 2, dans lequel une mémoire-tampon est intégrée dans le contrôleur (20) de façon à ce que, lorsque le premier bus et le deuxième bus ont des signaux d'horloge différents, le contrôleur (20) puisse lire de l'un des dispositifs au cours de chaque cycle d'horloge du bus de ce dispositif, et écrire simultanément dans l'autre des dispositifs au cours de chaque cycle d'horloge du bus de cet autre dispositif.

5. Système selon l'une quelconque des revendications précédentes, dans lequel le transfert de données entre le premier et le deuxième dispositif est un transfert de données par blocs consistant en une pluralité d'éléments d'information consécutifs.

6. Procédé pour transférer des données par accès direct à la mémoire entre un premier dispositif (18) connecté à un premier bus (12) et un deuxième dispositif (22, 24) connecté à un deuxième bus (14) par le biais d'un contrôleur (20) couplé au premier bus et au deuxième bus, le premier bus (12) ayant un signal d'horloge pour contrôler le cadencement du transfert de données et le deuxième bus (14) ayant un signal d'horloge pour contrôler le cadencement du transfert de données, le procédé étant caractérisé en ce qu'il comprend les étapes consistant à :
utiliser le contrôleur (20) pour contrôler le signal d'horloge du deuxième bus; et,
au cours d'un transfert de données entre le premier dispositif (18) et le deuxième dispositif (22, 24), extraire (lire) un élément d'information de l'un des dispositifs au cours d'un cycle d'horloge du bus de ce dispositif, et charger (écrire) un élément d'information dans l'autre des dispositifs au cours d'un cycle d'horloge du bus de cet autre dispositif;
le contrôleur exécutant ainsi une opération de lecture de l'un de dispositifs via un bus tout en exécutant une opération d'écriture dans l'autre des dispositifs via l'autre bus.

7. Procédé selon la revendication 6, dans lequel le signal d'horloge du dit deuxième bus peut être un signal d'horloge à grande vitesse pour contrôler le cadencement de transfert de données au cours d'un transfert de données à grande vitesse.

8. Procédé selon la revendication 6 ou 7, dans lequel, lorsque le premier bus et le deuxième bus ont la même cadence de transfert de données, le contrôleur (20) peut lire de l'un des dispositifs au cours de chaque cycle d'horloge du bus de ce dispositif, et écrire simultanément dans l'autre des dispositifs au cours de chaque cycle d'horloge du bus de cet autre dispositif.

9. Procédé selon la revendication 6 ou 7, dans lequel une mémoire-tampon est intégrée dans le contrôleur (20) de façon à ce que, lorsque le premier bus et le deuxième bus ont des signaux d'horloge différents, le contrôleur (20) puisse lire de l'un des dispositifs au cours de chaque cycle d'horloge du bus de ce dispositif, et écrire simultanément dans l'autre des dispositifs au cours de chaque cycle d'horloge du bus de cet autre dispositif.

10. Procédé selon la revendication 8, dans lequel les étapes de lecture et d'écriture qui ont lieu au cours du transfert de données entre le premier dispositif (18) et le deuxième dispositif (22, 24) comprennent les étapes suivantes exécutées par le contrôleur et consistant à :
(a) extraire (lire) un élément d'information de l'un des dispositifs selon le signal d'horloge de bus du bus de ce dispositif;
(b) charger (écrire) un élément d'information dans l'autre des dispositifs selon le signal d'horloge de bus du bus de cet autre dispositif;
(c) simultanément à l'étape (b), extraire (lire) un élément d'information suivant du premier dispositif;
(d) répéter les étapes (b) et (c) jusqu'à ce que tous les éléments d'information à transférer aient été extraits (lus) du premier dispositif; et
(e) charger (écrire) un dernier élément d'information dans l'autre dispositif.

11. Système selon l'une quelconque des revendications 6 à 10, dans lequel le transfert de données entre le premier et le deuxième dispositif est un transfert de données par blocs consistant en une pluralité d'éléments d'information consécutifs.
